# FASCICULE DE BREVET EUROPEEN

(11) **EP 1 168 033 B1**
(45) Date de publication et mention de la délivrance du brevet: **18.01.2006**
(21) Numéro de dépôt: 01401493.0
(22) Date de dépôt: 11.06.2001
(51) Int. Cl.: G02B 27/01

(54) **Dispositif de visualisation monté sur un casque**
Am Helm montiertes Sichtgerät
Helmet mounted viewing device

(30) Priorité: 19.06.2000 FR 0007785
(43) Date de publication de la demande: 02.01.2002
(73) Titulaire: Aerospatiale Matra Missiles, 75116 Paris (FR)
(72) Inventeur: Naccache, Frédéric, 91600 Savigny sur Orge (FR)
(74) Mandataire: Hauer, Bernard

(56) Documents cités:
- EP-A- 0 206 324
- EP-A- 0 531 121
- FR-A- 2 704 076
- FR-A- 2 750 016
- US-A- 4 757 378
- US-A- 4 920 412

## Description

La présente invention concerne un dispositif de visualisation monté sur un casque.

Bien que non exclusivement, ledit dispositif de visualisation s'applique plus particulièrement au casque d'un fantassin, notamment en vue d'une assistance au combat de nuit.

On sait que les dispositifs de visualisation destinés à l'aide au combat de nuit (voir par exemple le document FR-2 750 016) comprennent généralement des systèmes infrarouges ou amplificateurs de lumière, dont une caractéristique essentielle est qu'ils disposent d'un champ (de prise) de vue ou champ de visée qui est réduit. Ce champ de visée est d'autant plus réduit que la résolution est importante. Cette caractéristique technique contraint un fantassin ou combattant qui désire bénéficier de l'aide au combat de nuit de placer ses yeux (ou un oeil) devant un élément binoculaire (ou monoculaire) du type lunette de visée.

Cette contrainte qui peut être acceptable lorsqu'il s'agit de viser une cible, devient inacceptable dès que le fantassin doit par exemple se déplacer, se poster, observer ou surveiller son environnement immédiat. En effet, pour toutes ces opérations, une vision périphérique (ou vision «grand champ») est nécessaire, sinon le fantassin se trouve en situation de danger permanent.

Par le document US-4 920 412, on connaît un système d'observation de cible, permettant d'observer des cibles (par exemple un bateau) qui pénètrent dans une atmosphère obscurcie (par exemple par du brouillard). Ce système connu, qui peut être monté sur un casque, comporte notamment un laser susceptible d'émettre un faisceau laser en direction d'une scène à observer et une caméra susceptible de former des images d'une scène illuminée par le laser.

Par le document US-A-5883739, on connaît un système d'affichage d'information pour vehicule.

La présente invention concerne un dispositif de visualisation monté sur un casque, en particulier un dispositif d'aide à la vision nocturne, qui permet de remédier aux inconvénients précités.

A cet effet, selon l'invention, ledit dispositif de visualisation du type comportant au moins un moyen de prise de vue qui est susceptible de former des images d'au moins une partie de l'environnement situé à l'avant du casque, est remarquable en ce qu'il comporte de plus :
- au moins une unité de traitement d'image comportant un système d'extraction de contours qui extrait en temps réel des images formées par ledit moyen de prise de vue, les contours d'éléments (naturels ou artificiels) de l'environnement ;
- une visière du type semi-réfléchissante, qui est liée audit casque ; et
- au moins un système de projection qui est susceptible de projeter sur ladite visière des informations provenant de ladite unité de traitement d'image et qui est formé de manière à superposer, à l'environnement vu à travers ladite visière partiellement transparente, les contours correspondant à cet environnement, qui sont extraits, par ledit système d'extraction de contours, d'images de l'environnement formées par ledit moyen de prise de vue.

Ainsi, grâce à l'invention :
- comme, en plus de voir les contours, une personne (ci-après un porteur) portant ledit casque continue à voir par transparence l'environnement ou le paysage (ci-après la scène) devant elle, cette personne ou porteur conserve toute sa vision périphérique et toute sa vision centrale ;
- la projection des contours qui mettent en évidence notamment les contours d'objets et de reliefs du paysage, apporte une aide à la vision très efficace, notamment de nuit, mais également par temps de brouillard ou au travers de fumée ; et
- comme les images formées par le moyen de prise de vue ne sont pas projetées ou montrées, mais servent uniquement à l'extraction des contours, il n'est pas nécessaire que ces images présentent une résolution élevée.

Bien que non exclusivement, le dispositif conforme à l'invention est plus particulièrement adapté à la vision de nuit. Dans ce cas, de préférence, le moyen de prise de vue comprend une caméra infrarouge ou un système amplificateur de lumière, de types usuels.

Dans le cadre de la présente invention, une visière «du type semi-réfléchissante» est une visière qui est semi-réfléchissante ou qui présente des caractéristiques optiques équivalentes, notamment une visière comprenant un film holographique transparent.

De façon avantageuse, ledit système de projection comporte des moyens pour collimater à l'infini les contours qui sont projetés sur la visière. Ainsi, le porteur voit les contours de façon nette lorsqu'il observe normalement la scène.

En outre, avantageusement, ledit moyen de prise de vue, ladite visière et ledit système de projection sont solidaires dudit casque, c'est-à-dire liés de façon rigide audit casque. Ainsi :
- en premier lieu; on obtient un ensemble unitaire qui est, par exemple, facilement utilisable et transportable ; et surtout
- en second lieu, la rigidité de cet ensemble empêche tout décalage des contours par rapport à la scène, c'est-à-dire tout dérèglement du calibrage, lorsque le casque bouge par rapport à la tête du porteur.

Par ailleurs, dans un mode de réalisation particulier, le dispositif conforme à l'invention comporte une pluralité de moyens de prise de vue présentant des champs de visée respectivement adjacents de manière à former un champ global uniforme. Ceci permet d'obtenir un champ global de projection de contours très large, pouvant correspondre à ou même dépasser la zone de vision périphérique naturelle du porteur.

En outre, avantageusement, ledit système de projection est formé de manière à projeter lesdits contours sur ladite visière, avec au moins une couleur et une intensité lumineuse qui sont telles qu'une personne portant ledit casque ne soit pas éblouie. Dans ce cas, ladite couleur est, de préférence, du vert sombre ou du bleu électrique.

Les figures du dessin annexé feront bien comprendre comment l'invention peut être réalisée. Sur ces figures, des références identiques désignent des éléments semblables.
La figure 1 montre un casque muni d'un dispositif de visualisation conforme à l'invention.
La figure 2 illustre schématiquement un dispositif de visualisation conforme à l'invention.
La figure 3 est un schéma permettant de mettre en évidence l'indépendance du dispositif de visualisation par rapport à des mouvements relatifs entre le casque et la tête du porteur.
La figure 4 illustre schématiquement et partiellement un mode de réalisation particulier du dispositif de visualisation conforme à l'invention.

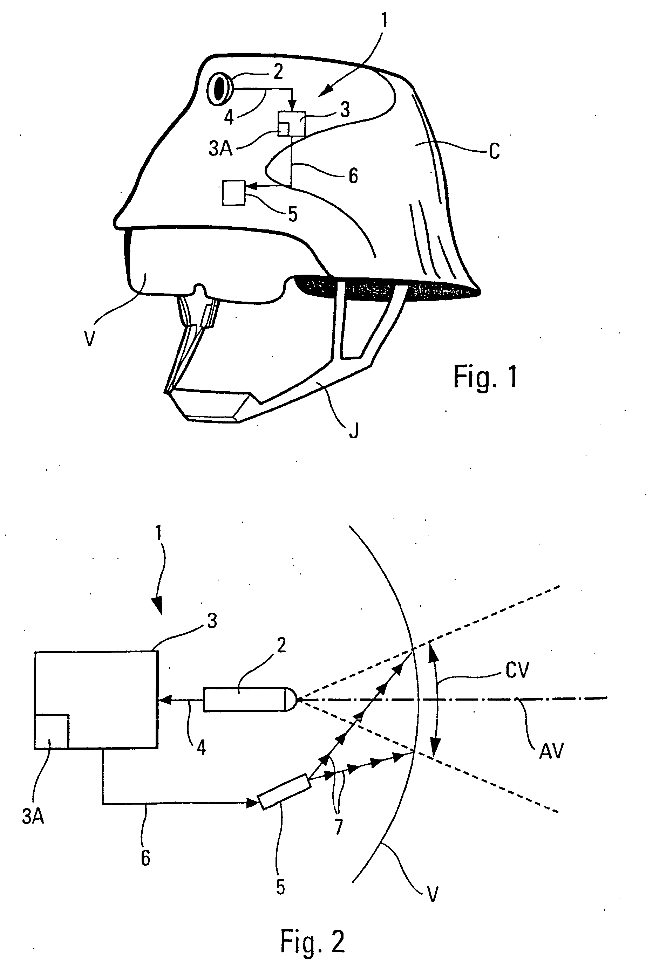

Le dispositif de visualisation 1 conforme à l'invention et représenté schématiquement sur la figure 2 est monté sur un casque C, par exemple le casque d'un militaire tel qu'un fantassin, qui est muni d'une jugulaire J et d'une visière V, comme représenté sur la figure 1.

Selon l'invention, ledit dispositif de visualisation 1 comporte, comme représenté sur les figures 1 et 2 :
- au moins un moyen de prise de vue 2 tel qu'une caméra, qui est solidaire du casque C, qui présente un axe de visée AV et qui est susceptible de former des images d'une partie de l'environnement situé à l'avant du casque C, dans son champ de visée CV;
- ladite visière V qui est semi-réfléchissante ou présente des propriétés optiques équivalentes. En particulier, elle peut comporter un film holographique transparent de type connu (voir par exemple la demande de brevet français FR-2 704 076) ;
- une unité de traitement d'image 3 qui est reliée, par l'intermédiaire d'une liaison 4, audit moyen de prise de vue 2 et qui comprend un système intégré d'extraction de contours 3A, de type usuel, qui extrait en temps réel les contours les plus significatifs (par exemple les plus importants concernant la variation du contraste) des objets situés sur les images formées par ledit moyen de prise de vue 2 ; et
- un système de projection 5, de type usuel, qui est relié par une liaison 6 à l'unité de traitement d'image 3, qui est susceptible de projeter des informations provenant de cette dernière sur la face interne de la visière V (qui est concave dans le cas d'une visière courbe), comme illustré par un faisceau de projection 7, et qui est formé de manière à superposer, à l'environnement vu à travers ladite visière V du type semi-réfléchissante, les contours correspondant à cet environnement, qui sont extraits par ledit système d'extraction de contours 3A d'images de l'environnement formées par ledit moyen de prise de vue 2.

Afin que le porteur du casque C voit de façon nette la scène, lorsqu'il regarde normalement à travers la visière V la scène devant lui, le système de projection 5 comporte des moyens connus et non représentés pour collimater à l'infini les contours qui sont projetés sur la visière V.

Bien que non exclusivement, le dispositif 1 conforme à l'invention est plus particulièrement adapté à l'aide à la vision de nuit. Dans ce cas, de préférence le moyen de prise de vue 2 est une caméra infrarouge ou un système amplificateur de lumière, de types usuels.

De ce qui précède, on comprend aisément que le moyen de prise de vue ou caméra 2 filme la scène qu'observe le porteur du casque C à travers la visière V et transmet les images ainsi formées à l'unité de traitement d'image 3. Le système d'extraction de contours 3A de cette dernière extrait de ces images les contours significatifs et les transmet au système de projection 5 qui les projette sur la visière V de sorte qu'ils soient non déformés (si la visière V est courbe) et nets à l'infini. De plus, grâce à un calibrage approprié entre le centrage, le champ de visée CV du moyen de prise de vue 2 et le champ (faisceau de projection 7) projeté sur la visière V, les contours se superposent parfaitement à la scène vue par le porteur.

Ainsi, grâce à l'invention, le porteur conserve toute sa vision périphérique naturelle et toute sa vision centrale naturelle, puisqu'en plus des contours projetés, il continue à voir la scène réelle par transparence à travers la visière V.

De plus, le dispositif de visualisation 1 présente les avantages supplémentaires suivants :
- comme les images formées par le moyen 2 ne sont pas projetées ou montrées, mais servent uniquement à l'extraction des contours, il n'est pas nécessaire que ces images présentent une résolution élevée ; et
- la projection des contours apporte au porteur, par exemple un fantassin posté ou en déplacement qui observe et surveille son environnement immédiat, une aide à la vision particulièrement efficace, notamment de nuit, mais également par temps de brouillard ou au travers de fumée.

Dans le cadre de la présente invention, les contours significatifs extraits sont, de préférence, les contours qui correspondent à la jonction entre deux zones présentant une différence de contraste qui est supérieure à une valeur de contraste prédéfinie.

Bien entendu, d'autres caractéristiques ou paramètres usuels, qui sont bien connus dans le domaine de l'extraction de contours d'images, peuvent être pris en compte par le système 3A lors de la mise en ceuvre de la présente invention.

En particulier pour des raisons d'encombrement et de poids, ledit moyen de prise de vue 2 et ledit système de projection 5 sont miniaturisés.

De plus, ledit moyen de prise de vue 2 est, de préférence, agencé au sommet et au centre du casque C, comme représenté sur la figure 1, de manière à obtenir des images qui sont centrées par rapport à l'orientation de la tête du porteur, l'axe de visée AV correspondant ainsi sensiblement à l'axe central du champ de vision du porteur lorsque celui-ci regarde devant lui.

Comme le dispositif 1 conforme à l'invention est principalement conçu pour l'aide à la vision de nuit, le système de projection 5 est formé de manière à projeter les contours sur ladite visière V avec au moins une couleur et une intensité lumineuse qui sont telles que le porteur du casque C ne soit pas ébloui et que le dispositif 1 ne soit pas facilement détectable par un ennemi éventuel. On utilise à cet effet, de préférence, comme couleur, un vert sombre et/ou un bleu électrique.

En outre, selon l'invention, ledit moyen de prise de vue 2, ladite visière V et ledit système de projection 5 sont solidaires dudit casque C, c'est-à-dire sont liés de façon rigide audit casque C. Ainsi :
- en premier lieu, on obtient un ensemble unitaire qui est, par exemple, facilement utilisable et transportable ; et surtout
- en second lieu, la rigidité de cet ensemble empêche tout décalage des contours par rapport à la scène, c'est-à-dire tout dérèglement du calibrage, lorsque le casque C bouge par rapport à la tête du porteur.

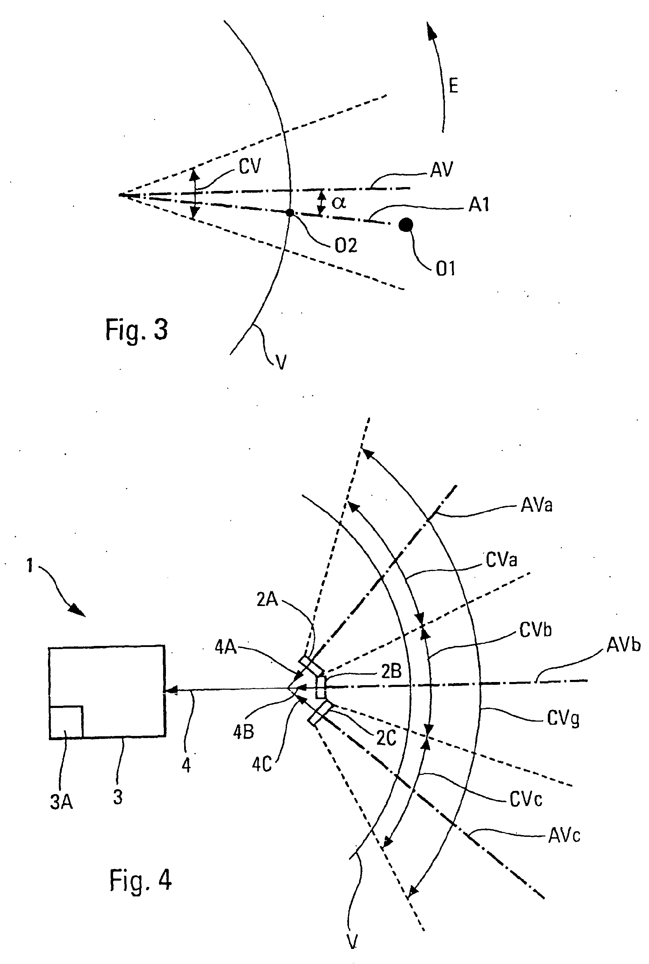

Cette dernière caractéristique est mise en évidence à l'aide du schéma de la figure 3 qui montre notamment :
- un objet 01 (à savoir un point d'un contour significatif) de la scène, qui est vu par le moyen de prise de vue 2 selon un axe A1 qui forme un angle α avec l'axe de visée AV ; et
- une partie de contour 02 qui correspond à cet objet 01 et qui est projetée sur la visière V.

Dans ce cas, si le casque C tourne par exemple, par rapport à la tête du porteur, d'un angle β non représenté, vers la gauche (dans le sens de la flèche E sur la vue de dessus de la figure 3), le moyen de prise de vue 2 tourne de ce même angle β (puisqu'il est solidaire dudit casque C) de sorte qu'un point du paysage (objet 01) tourne d'un angle β vers la droite dans l'image traitée. Cette rotation dans l'image étant donc exactement opposée à la rotation du casque C et donc également à la rotation du système de projection 5 solidaire dudit casque C, le contour 02 de l'objet 01 considéré ne bouge pas et reste correctement positionné par rapport au paysage observé.

Dans un mode de réalisation particulier représenté sur la figure 4, le dispositif de visualisation 1 comporte une pluralité de moyens de prise de vue 2A, 2B et 2C qui sont reliés respectivement par l'intermédiaire de liaisons 4A, 4B et 4C à la liaison 4, qui présentent des axes de visée AVa, AVb et AVc et qui présentent des champs de visée CVa, CVb, CVc réspectivement adjacents de manière à former un champ global CVg uniforme.

Ceci permet d'obtenir une aide à la vision de nuit sur une zone angulaire (CVg) très large, pouvant même dépasser la zone de vision périphérique naturelle du porteur.

Pour des raisons de simplification du dessin, nous n'avons pas représenté le système de projection 5 sur la figure 4. Dans ce mode de réalisation particulier, le dispositif 1 conforme à l'invention peut comporter :
- soit un unique système de projection 5, le système de traitement d'image 3 réalisant alors l'association des images complémentaires formées par les différents moyens de prise de vue 2A, 2B et 2C ;
- soit une pluralité de systèmes de projection 5 associés respectivement auxdits moyens de prise de vue 2A, 2B et 2C.

## Revendications

1. Dispositif de visualisation monté sur un casque et comportant au moins un moyen de prise de vue (2) qui est susceptible de former des images d'au moins une partie de l'environnement situé à l'avant du casque (C),
comportant de plus :
- au moins une unité de traitement d'image (3) comportant un système d'extraction de contours (3A), qui extrait en temps réel des images formées par ledit moyen de prise de vue (2), les contours d'éléments (01) de l'environnement ;
- une visière (V) du type semi-réfléchissante, qui est liée audit casque (C) ; et
- au moins un système de projection (5) qui est susceptible de projeter sur ladite visière (V) des informations provenant de ladite unité de traitement d'image (3) et qui est formé de manière à superposer, à l'environnement vu à travers ladite visière (V) partiellement transparente, les contours correspondant à cet environnement, qui sont extraits par ledit système d'extraction de contours (3A), d'images de l'environnement formées par ledit moyen de prise de vue (2).

2. Dispositif selon la revendication 1,
où ledit système de projection (5) comporte des moyens pour collimater à l'infini les contours qui sont projetés sur la visière (V).

3. Dispositif selon l'une des revendications 1 et 2,
où ledit moyen de prise de vue (2), ladite visière (V) et ledit système de projection (5) sont solidaires dudit casque (C).

4. Dispositif selon l'une des revendications 1 à 3,
comportant une pluralité de moyens de prise de vue (2A, 2B, 2C) présentant des champs de visée (CVa, CVb, CVc) respectivement adjacents de manière à former un champ global uniforme (CVg).

5. Dispositif selon l'une quelconque des revendications 1 à 4,
où ledit moyen de prise de vue (2) comprend une caméra infrarouge.

6. Dispositif selon l'une quelconque des revendications 1 à 4,
où ledit moyen de prise de vue (2) comprend un système amplificateur de lumière.

7. Dispositif selon l'une quelconque des revendications précédentes,
où ledit système de projection (5) est formé de manière à projeter lesdits contours sur ladite visière (V), avec au moins une couleur et une intensité lumineuse qui sont telles qu'une personne portant ledit casque (C) ne soit pas éblouie.

8. Dispositif selon la revendication 7,
où ladite couleur est du vert sombre.

9. Dispositif selon l'une des revendications 7 et 8,
où ladite couleur est du bleu électrique.

10. Dispositif selon l'une quelconque des revendications précédentes,
où ladite visière (V) comprend un film holographique transparent.

## Patentansprüche

1. Sichtgerät, das an einem Helm montiert ist und wenigstens eine Bildaufnahmevorrichtung (2) aufweist, die geeignet ist, wenigstens von einem Teil der Umgebung, die sich vor dem Helm (C) befindet, Bilder herzustellen, ferner aufweisend:
- wenigstens eine Bildbearbeitungseinheit (3), die ein System zur Konturenextraktion (3A) aufweist, das in Echtzeit aus den Bildern, die von der Bildaufnahmevorrichtung (2) hergestellt werden, die Konturen von Elementen (01) der Umgebung extrahiert;
- ein Visier (V) des halbreflektierenden Typs, das an dem Helm (C) befestigt ist; und
- wenigstens eine Projektionsvorrichtung (5), die geeignet ist, auf das Visier (V) Informationen zu projizieren, die von der Bildbearbeitungseinheit (3) kommen, und das so ausgebildet ist, dass es die Umgebung, die durch das teilweise durchsichtige Visier (V) hindurch gesehen wird, mit den Konturen überlagert, die dieser Umgebung entsprechen und die von dem Konturenextraktionssystem (3A) aus Bildern der Umgebung extrahiert werden, die von der Bildaufnahmevorrichtung (2) hergestellt werden.

2. Gerät nach Anspruch 1,
wobei das Projektionssystem (5) Mittel aufweist, um die Konturen, die auf das Visier (V) projiziert werden, ins Unendliche zu kollimieren.

3. Gerät nach einem der Ansprüche 1 und 2,
wobei die Bildaufnahmevorrichtung (2), das Visier (V) und das Projektionssystem (5) einstückig mit dem Helm (C) ausgebildet sind.

4. Gerät nach einem der Ansprüche 1 bis 3,
das eine Vielzahl von Bildaufnahmevorrichtungen (2A, 2B, 2C) mit jeweils nebeneinander liegenden Sehbereichen (CVa, CVb, CVc) aufweist, so dass ein ganzheitliches, gleichförmiges Feld (CVg) entsteht.

5. Gerät nach einem der Ansprüche 1 bis 4,
wobei die Bildaufnahmevorrichtung (2) eine Infrarotkamera umfasst.

6. Gerät nach einem der Ansprüche 1 bis 4,
wobei die Bildaufnahmevorrichtung (2) eine Lichtverstärkungsvorrichtung umfasst.

7. Gerät nach einem der vorhergehenden Ansprüche,
wobei das Projektionssystem (5) derart ausgebildet ist, dass es die Konturen mit wenigstens einer Farbe und einer Lichtstärke auf das Visier (V) projiziert, die so beschaffen sind, dass die Person, die den Helm (C) trägt, nicht geblendet wird.

8. Gerät nach Anspruch 7,
wobei die Farbe ein Dunkelgrün ist.

9. Gerät nach einem der Ansprüche 7 und 8,
wobei die Farbe ein Elektrischblau ist.

10. Gerät nach einem der vorhergehenden Ansprüche,
wobei das Visier (V) einen transparenten holographischen Film umfasst.

## Claims

1. Helmet-mounted display device comprising at least one image capture means (2) capable of forming images of at least part of the environment situated in front of the helmet (C),
additionally comprising:
- at least one image processing unit (3) comprising a contour extraction system (3A) which, in real time, extracts the contours of elements (01) of the environment from the images formed by the said image capture means (2);
- a visor (V) of the semi-reflective type, which is connected to the said helmet (C); and
- at least one projection system (5) capable of projecting onto the said visor (V) information originating from the said image processing unit (3) and which is formed in such a way as to superimpose onto the environment seen through the said partially transparent visor (V) the contours corresponding to this environment which are extracted by the said contour extraction system (3A) from images of the environment formed by the said image capture means (2).

2. Device according to Claim 1,
in which the said projection system (5) comprises means for collimating at infinity the contours which are projected onto the visor (V).

3. Device according to one of Claims 1 and 2,
in which the said image capture means (2), the said visor (V) and the said projection system (5) are secured to the said helmet (C).

4. Device according to one of Claims 1 to 3,
comprising a plurality of image capture means (2A, 2B, 2C) having respectively adjacent fields of view (CVa, CVb, CVc) so as to form a uniform overall field (CVg).

5. Device according to any one of Claims 1 to 4,
in which the said image capture means (2) comprises an infrared camera.

6. Device according to any one of Claims 1 to 4,
in which the said image capture means (2) comprises a light intensifier system.

7. Device according to any one of the preceding claims,
in which the said projection system (5) is formed in such as way as to project the said contours onto the said visor (V) with at least a colour and an intensity of light which are such that an individual wearing the said helmet (C) is not dazzled.

8. Device according to Claim 7,
in which the said colour is dark green.

9. Device according to one of Claims 7 and 8,
in which the said colour is electric blue.

10. Device according to any one of the preceding claims,
in which the said visor (V) comprises a transparent holographic film.
